# EUROPÄISCHE PATENTSCHRIFT

(11) **EP 2 096 131 B1**
(45) Veröffentlichungstag und Bekanntmachung des Hinweises auf die Patenterteilung: **28.01.2015**
(21) Anmeldenummer: 09002179.1
(22) Anmeldetag: 17.02.2009
(51) Int. Cl.: C08G 64/24, C01D 3/06

(54) **Verfahren zur Herstellung von Polycarbonat**
Method for making polycarbonate
Procédé de fabrication de polycarbonate

(30) Priorität: 27.02.2008 DE 102008011473
(43) Veröffentlichungstag der Anmeldung: 02.09.2009
(73) Patentinhaber: Bayer Intellectual Property GmbH, 40789 Monheim (DE)
(72) Erfinder: Ooms, Pieter, Dr., 47800 Krefeld (DE); Bulan, Andreas, 40764 Langenfeld (DE); Weber, Rainer, Dr., 51519 Odenthal (DE); Rechner, Johann, Dr., 47906 Kempen (DE)
(74) Vertreter: BIP Patents

(56) Entgegenhaltungen:
- EP-B1- 1 200 359
- WO-A-01/38419

## Beschreibung

Die Erfindung betrifft ein kombiniertes Verfahren zur Herstellung von Polycarbonat nach dem Phasengrenzflächenverfahren und Elektrolyse von Natriumchlorid-haltigem Prozessabwasser.

Die Herstellung von Polycarbonaten nach dem Phasengrenzflächenverfahren ist allgemein bekannt. Sie erfolgt üblicherweise in einem kontinuierlichen Verfahren, durch Herstellung von Phosgen und anschließende Reaktion von Bisphenolen und Phosgen in Gegenwart von Alkali und einem Katalysator, vorzugsweise einem Stickstoffkatalysator, Kettenabbrechern, und gegebenenfalls Verzweigern in einem Gemisch aus wässrig-alkalischer Phase und organischer Lösungsmittelphase in der Grenzfläche.

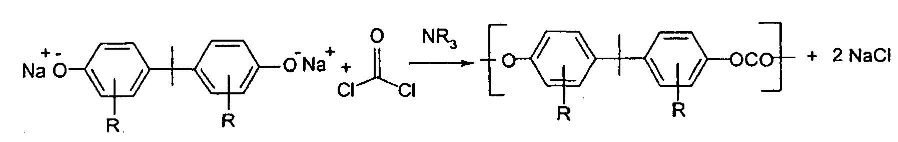

Die Herstellung von Polycarbonaten z.B. durch den Phasengrenzflächenprozess ist prinzipiell in der Literatur beschrieben, siehe Schnell, "Chemistry and Physics of Polycarbonates", Polymer Reviews, Volume 9, Interscience Publishers, New York, London, Sydney 1964, S. 33-70; D.C. Prevorsek, B.T. Debona und Y. Kesten, Corporate Research Center, Allied Chemical Corporation, Morristown, New Jersey 07960: "Synthesis of Poly(ester Carbonate) Copolymers" in Journal of Polymer Science, Polymer Chemistry Edition, Vol. 18, (1980)"; S. 75-90, D. Freitag, U. Grigo, P.R. Müller, N. Nouvertne', BAYER AG, "Polycarbonates" in Encyclopedia of Polymer Science and Engineering, Volume 1 1, Second Edition, 1988, S. 651-692 und schließlich von Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Car1 Hanser Verlag München, Wien 1992, S. 118-145.

Bei der Herstellung von Polycarbonaten hat sich das Phasengrenzflächenverfahren, auch als Zweiphasengrenzflächenverfahren bezeichnet, seit vielen Jahren bewährt. Das Verfahren ermöglicht die Herstellung von thermoplastischen Polycarbonaten in einer Reihe von Einsatzgebieten wie z.B. für Datenträger (CD, DVD), für optische Anwendungen oder für medizinische Anwendungen.

Häufig werden als wichtige Qualitätsmerkmale für das Polycarbonat eine gute Thermostabilität und eine geringe Vergilbung beschrieben. Wenig Beachtung fand bisher die Qualität des bei der Herstellung von Polycarbonaten anfallenden Abwassers. Insbesondere die Belastung des Abwassers mit Restorganika wie z.B. Restphenolen ist dabei von Bedeutung für eine eventuelle weitere Behandlung des Abwassers z.B. durch eine Kläranlage oder durch eine Ozonolyse zur Oxidation der Restorganika. Hier hat es eine Reihe von Anmeldungen gegeben, in denen aber überwiegend Methoden zur nachträglichen Abwasserbehandlung beschrieben werden, mit dem Ziel, die Belastung an phenolischen Komponenten zu reduzieren - siehe z.B.: JP 08 245 780 A (Idemitsu); DE 19 510 063 A1 (Bayer); JP 03 292 340 A (Teijin); JP 03 292 341 A (Teijin); JP 02 147 628 A (Teijin).

Die Belastung des Abwassers mit Restorganika wie z.B. mit Bisphenolen oder beispielsweise als Kettenabbrechern verwendeten Phenolen kann gering gehalten werden, wenn mit einem hohem Phosgenüberschuss gearbeitet wird. Dies ist aber aus wirtschaftlichen Gründen unerwünscht.

Bei der Herstellung von Polycarbonaten mit reduziertem Phosgenüberschuss besteht die Gefahr, dass nicht alles Bisphenol bzw. alles Monophenol abreagiert und das Abwasser belastet. Weiterhin besteht die Gefahr, dass die Phasenseparation und die Wäsche erschwert ist, dadurch, dass im Polymer grenzflächenaktive phenolische OH-Gruppen verbleiben. Dadurch werden gegebenenfalls nicht alle wasserlöslichen Verunreinigungen aus der organischen Phase extrahiert. Dies kann wiederum die Produktqualität negativ beeinflussen.

Es bleibt festzuhalten, dass die Herstellung von Polycarbonat hoher Qualität nach einem kontinuierlichen Zweiphasengrenzflächenverfahren bei gleichzeitig geringer Belastung des Abwassers entweder nur mit hohem Phosgenüberschuss oder mit Phasentrennproblemen - verbunden mit Qualitätseinbußen des Polycarbonates - oder durch nachträgliche Behandlung des Abwassers möglich ist, wodurch die Wirtschaftlichkeit des Verfahrens reduziert wird.

Als nächstliegender Stand der Technik ist die DE-A 42 27 372 der Anmelderin zu betrachten, in welcher bereits die apparative Anordnung des erfindungsgemäßen Verfahrens beschrieben ist. Im Gegensatz zur erfindungsgemäßen Lehre ist jedoch der DE-A 42 27 372 keinerlei Lehre zu entnehmen in welchen Mengen- und vor allem in welchen Umpumpverhältnissen die Edukte zusammengeführt werden, geschweige denn, dass mittels speziell eingestellter Mengen- und Umpumpverhältnissen eine besonders geringe Abwasserbelastung mit Restorganika, wie Phenolen und Bisphenolen, erreicht werden kann.

Bei diesen bekannten Verfahren macht jedoch ein hoher Restgehalt an Bisphenolen oder Phenolen - im Folgenden auch als Restphenolgehalt bezeichnet - im Abwasser dieser Prozesse, welche die Umwelt belasten können und die Klärwerke vor eine erhöhte Abwasserproblematik stellen, aufwendige Reinigungsoperationen erforderlich.

Üblicherweise wird die Natriumchlorid-haltige Lösung von Lösungsmitteln und organischen Resten befreit und muss dann entsorgt werden.

Bekannt ist aber auch, dass die Reinigung der Natriumchlorid-haltigen Abwässer gemäß der EP 1 200 359 B1 (WO 2000/078682 A1) oder US-A 6,340,736 durch Ozonolyse erfolgen kann und dann zum Einsatz bei der Natriumchlorid-Elektrolyse geeignet ist. Nachteil der Ozonolyse ist, dass dieses Verfahren sehr kostenintensiv ist.

Gemäß der EP 541 114 A2 wird ein Natriumchlorid-haltiger Abwasserstrom bis zur vollständigen Entfernung des Wassers eingedampft und das zurückbleibende Salz mit den organischen Verunreinigungen einer thermischen Behandlung unterzogen, wodurch die organischen Bestandteile zersetzt werden. Besonders bevorzugt ist dabei der Einsatz von Infrarotstrahlung. Nachteil des Verfahrens ist, dass das Wasser vollständig verdampft werden muss, so dass das Verfahren wirtschaftlich nicht durchführbar ist.

Gemäß der WO 03/070639 A1 wird das Abwasser aus einer Polycarbonatproduktion durch Extraktion mit Methylenchlorid gereinigt und dann der Natriumchlorid-Elektrolyse zugeführt. Durch das beschriebene Verfahren können jedoch nur max. 14% des Natriumchlorids aus dem Abwasser der Polycarbonat-Produktion zurück gewonnen werden, da bei größeren Einsatzmengen das in die Elektrolyse mit dem Abwasser eingebrachte Wasser die Wasserbilanz der Natriumchlorid-Elektrolyse aus dem Gleichgewicht bringen würde. Dies setzt voraus, dass ein Abwasser mit einem NaCl-Gehalt von 10% eingesetzt wird und bei der NaCl-Elektrolyse ein Wassertransport über die Ionenaustauschermembran von 4 mol Wasser je mol Natrium erfolgt.

Die Natriumchlorid-haltigen Lösungen, die bei der Polycarbonat-Produktion anfallen, haben typischerweise einen Natriumchlorid-Gehalt von 6 bis 10 Gew.-%. Somit kann nie das in den Lösungen vorhandene gesamte Natriumchlorid wieder gewonnen werden. Bei einer Natriumchlorid-Konzentration von 10 Gew.-% gelingt bei der Standard-Natriumchlorid-Elektrolyse mit einer handelsüblichen Ionenaustauschermembran, die einen Wassertransport von 3,5 mol Wasser je mol Natrium aufzeigt, nur der Einsatz von ca. 13 % des Natriumchlorids aus dem Natrium-chlorid-haltigen Lösungen. Selbst bei Aufkonzentrierung bis zu einer gesättigten Natriumchlorid-Lösung von ca. 25 Gew.-% gelänge nur eine Recyclingquote von 38 % des in der Natriumchlorid-haltigen Lösung enthaltenden Natriumchlorids. Ein vollständiges Recycling der Natriumchlorid-haltigen Lösung ist nicht bekannt geworden. Gemäß der WO-A 01/38419 kann die Natriumchlorid-haltige Lösung mittels thermischer Verfahren eingedampft werden, so dass eine hoch konzentrierte Natriumchlorid-Lösung der Elektrolysezelle zugeführt werden kann. Die Eindampfung ist jedoch energieintensiv und kostspielig.

Ausgehend vom oben geschilderten Stand der Technik ist die Aufgabe, ein Verfahren bereitzustellen, welches Produkte in hoher Reinheit und guter Ausbeute liefert, und gleichzeitig eine Reduzierung der Umweltbelastung bzw. Abwasserproblematik in den Klärwerken durch maximierte Rückführung von Natriumchlorid aus Natriumchlorid-haltigen Prozessabwasserlösungen darstellt, die aus der Polycarbonat-Produktion erhalten werden.

Insbesondere sollte bei dem Recycling berücksichtigt werden, dass die Umsetzung von Natriumchlorid zu Chlor und Natronlauge und gegebenenfalls Wasserstoff mit minimalem Energieeinsatz und daher ebenfalls Resourcen-schonend erfolgen sollte.

Es wurde nun gefunden, dass bei der kontinuierlichen Herstellung von Polycarbonat durch Reaktion von Bisphenolen und Phosgen in einem inerten Lösungsmittel oder Lösungsmittelgemisch in Gegenwart von Base(n) und Katalysator(en) eine verbesserte Rückführung von Natriumchlorid aus den in der Grenzfläche anfallenden Natriumchlorid-haltigen Abwasserlösungen ohne aufwendige Reinigung nach pH-Einstellung auf einen pH kleiner oder gleich 8 und nach einfacher Behandlung mit Aktivkohle durch direkte Zuführung einer elektrochemischen Oxidation des enthaltenen Natriumchlorids zu Chlor, Natronlauge und gegebenenfalls Wasserstoff erzielt werden kann, wobei das Chlor zur Herstellung des Phosgens rückgeführt werden kann.

Gegenstand der Erfindung ist ein Verfahren zur Herstellung von Polycarbonat nach dem Phasengrenzflächenverfahren und Verarbeitung mindestens eines Teils der dabei anfallenden Alkalichlorid-haltigen Lösung in einer nachgeschalteten Alkalichlorid-Elektrolyse, umfassend die folgenden Schritte:
(a) Herstellung von Phosgen durch Umsetzung von Chlor mit Kohlenmonoxid,
(b) Umsetzung des gemäß Schritt a) gebildeten Phosgens mit wenigstens einem Bisphenol in Gegenwart wenigstens einer Base, vorzugsweise wenigstens einer Alkalihaltigen Base, insbesondere einer Natrium-haltigen Base, gegebenenfalls wenigstens eines basischen Katalysators und gegebenenfalls wenigstens eines organischen Lösungsmittels zu einem Polycarbonat und einer Alkalichlorid-haltigen, insbesondere einer Natriumchlorid-haltigen Lösung,
(c) Abtrennung und Aufarbeitung des in Schritt b) gebildeten Polycarbonats,
(d) Abtrennung der gemäß Schritt c) verbliebenen Alkalichlorid-haltigen Lösung von Lösungsmittelresten und gegebenenfalls Katalysatorresten insbesondere durch Strippen der Lösung mit Wasserdampf und Behandlung mit Adsorbentien, insbesondere mit Aktivkohle,
(e) elektrochemische Oxidation wenigstens eines Teils der Alkalichlorid-haltigen Lösung aus d) unter Bildung von Chlor, Alkalilauge und gegebenenfalls Wasserstoff,
   **dadurch gekennzeichnet, dass** bei der Abtrennung d) der Lösung vor Behandlung mit Adsorbentien die Lösung auf einen pH-Wert kleiner oder gleich 8 eingestellt wird und
(f) wenigstens ein Teil des gemäß Schritt e) hergestellten Chlors in die Herstellung von Phosgen gemäß Schritt a) zurückgeführt wird und/oder
(g) wenigstens ein Teil des gemäß Schritt e) hergestellten Alkalilauge in die Herstellung von Polycarbonat gemäß Schritt b) zurückgeführt wird.

Bevorzugt wird die Alkalichlorid-haltige Lösung des Reaktionsabwassers aus Schritt b) oder wenigstens teilweise mit Waschwasser aus der Aufarbeitung c) des Polycarbonats vereinigt eingesetzt.

Geeignete Bisphenole sind Dihydroxydiarylalkane der allgemeinen Formel (I),

HO-Z-OH (I)

worin Z ein divalenter organischer Rest mit 6 bis 30 Kohlenstoffatomen ist, der eine oder mehrere aromatische Gruppen enthält. Beispiele solcher Verbindungen, die in Schritt b) des erfindungsgemäßen Verfahrens eingesetzt werden können sind Dihydroxydiarylalkane wie Hydrochinon, Resorcin, Dihydroxydiphenyl, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α ,α'-Bis-(hydroxyphenyl)-diisopropylbenzole, sowie deren alkylierte, kernalkylierte und kernhalogenierte Verbindungen.

Bevorzugte Dihydroxydiarylalkane sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan (Bisphenol A (BPA)), 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol, 1,1-Bis-(4-hydroxyphenyl)-cyclohexan und 1,1-Bis-(4-hydroxyphenyl)-3,3,5-trimethylcyclohexan (Bisphenol TMC).

Besonders bevorzugte Dihydroxydiarylalkane sind 4,4'-Dihydroxydiphenyl, 1,1-Bis-(4-hydroxyphenyl)-phenyl-ethan, 2,2-Bis-(4-hydroxyphenyl)-propan (Bisphenol A (BPA)), 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Diese und weitere geeignete Dihydroxydiarylalkane sind z.B. in den US-A 2,999,835, US-A 3,148,172 US-A 2,991,273, US-A 3,271,367, US-A 4,982,014 und US-A 2,999,846 in den deutschen Offenlegungsschriften DE-A 15 70 703, DE-A 20 63 050, DE-A 20 36 052, DE-A 22 11 956 und DE-A 38 32 396, der französischen Patentschrift FR-A 1 561 518, in der Monographie von H. Schnell, Chemistry and Physics of Polycarbonates, Interscience Publishers, New York 1964, S. 28ff; S.102ff und von D.G. Legrand, J.T. Bendler, Handbook of Polycarbonate Science and Technology, Marcel Dekker New York 2000, S. 72ff. beschrieben.

Im Falle der erfindungsgemäßen Herstellung von Homopolycarbonaten wird nur ein Bisphenol eingesetzt, im Falle der erfindungsgemäßen Herstellung von Copolycarbonaten werden mehrere Bisphenole eingesetzt, wobei selbstverständlich die verwendeten Bisphenole, wie auch alle anderen der Synthese zugesetzten Chemikalien und Hilfsstoffe mit den aus ihrer eigenen Synthese, Handhabung und Lagerung stammenden Verunreinigungen kontaminiert sein können, obwohl es wünschenswert ist, mit möglichst sauberen Rohstoffen zu arbeiten.

Es sei hier betont, dass das erfindungsgemäße Verfahren praktisch für alle bekannten Bisphenole eingesetzt werden kann.

Die Bisphenole werden im erfindungsgemäßen Verfahren in wässrig alkalischer Lösung eingesetzt, die Konzentration an Bisphenolen beträgt dabei 10 bis 20 Gew.-%, bevorzugt 12,5 bis 17,5 Gew.-%, bezogen auf das Gesamtgewicht der Lösung. Die Menge an Alkali in der wässrig alkalischen Lösung beträgt 1,0 bis 3,0 Mol Alkali pro Mol Bisphenol und ist abhängig von der Löslichkeit des eingesetzten Bisphenols.

Das Phosgen wird bevorzugt in wenigstens einem organischen Lösungsmitteln gelöst eingesetzt. Bevorzugt beträgt die Konzentration des Phosgens in dieser Lösung 7 bis 10 Gew.-%, besonders bevorzugt 8 bis 9,5 Gew.-%.

Geeignete Kettenabbrecher und Verzweiger sind literaturbekannt. Einige sind beispielsweise in der DE-A 38 33 953 beschrieben. Bevorzugt eingesetzte Kettenabbrecher sind Phenol oder Alkylphenole, insbesondere Phenol, p-tert.Butylphenol, iso-Octylphenol, Cumylphenol, deren Chlorkohlensäureester oder Säurechloride von Monocarbonsäuren bzw. Gemischen aus diesen Kettenabbrechern. Bevorzugte Kettenabbrecher sind Phenol, Cumylphenol, Isooctylphenol und para-tert.-Butylphenol.

Beispiele für als Verzweiger geeignete Verbindungen sind aromatische oder Aliphatische Verbindungen mit mehr als drei, bevorzugt drei oder vier Hydroxygruppen. Besonders geeignete Beispiele für Verbindungen mit drei oder mehr als drei phenolischen Hydroxylgruppen sind Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-4,4-bis-(4-hydroxyphenyl)-cyclohexyl]-propan, 2,4-Bis-(4-hydroxyphenyl-isopropyl)-phenol und Tetra-(4-hydroxyphenyl)-methan.

Beispiele für sonstige als Verzweiger geeignete trifunktionelle Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Besonders bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die in Schritt b) eingesetzte Base zur Bildung des Bisphenolats kann eine Alkalilauge mit Hydroxiden aus der Reihe: Na-, K-, Li-Hydroxid sein, gegebenenfalls können auch Erdalkalilaugen eingesetzt werden. Bevorzugt sind Alkali-haltige Basen, wie z.B. Natronlauge, Kalilauge oder Mischungen aus diesen. Ganz besonders bevorzugt ist wässrige Natronlauge. Im erfindungsgemäßen Verfahren wird vorzugsweise kommerziell erhältliche Natronlauge, besonders bevorzugt solche mit einem NaOH-Gehalt von 20 bis 60 Gew.-%, ganz besonders bevorzugt mit einem NaOH-Gehalt von 30 bis 50 Gew.-%, eingesetzt. In bevorzugten Ausführungsformen des erfindungsgemäßen Verfahrens wird Natronlauge eingesetzt, welche direkt aus dem Amalgam- bzw. Membranverfahren der Chlor-Alkali-Elektrolyse erhalten wird.

Als basische Katalysatoren für die Reaktion b) kommen im Prinzip alle für die Herstellung von Polycarbonaten nach dem Zweiphasengrenzflächenverfahren bekannten Katalysatoren in Frage. Als Katalysatoren für die Reaktion in Schritt b) des erfindungsgemäßen Verfahrens eignen sich bevorzugt tertiäre Amine, wie z.B. Triethylamin, Tributylamin, Trioctylamin, N-Alkylpiperidine, wie z.B. N-Ethylpiperidin, N-Methylpiperidin oder N-i/n-Propylpiperidin, Pyridin, quartäre Ammoniumsalze wie z.B. Tetrabutylammonium-, Tributylbenzylammonium-, Tetraethylammoniumhydroxid, -chlorid, -bromid, - hydrogensulfat oder -tetrafluoroborat sowie die den vorangehend genannten Ammoniumverbindungen entsprechenden Phosphoniumverbindungen. Diese Verbindungen sind als typische Phasengrenzflächenkatalysatoren in der Literatur beschrieben, kommerziell erhältlich und dem Fachmann geläufig. Die Gesamtmenge der verwendeten Katalysatoren liegt zwischen 0,001 bis 10 Mol %, bevorzugt 0,01 bis 8 Mol %, besonders bevorzugt 0,05 bis 5 Mol % bezogen auf Mole eingesetzte(s) Bisphenol(e).

Der eingesetzte basische Katalysator kann offenkettig oder cyclisch sein, ganz besonders bevorzugt ist Triethylamin und Ethylpiperidin. Der Katalysator wird im neuen Verfahren vorzugsweise als 1 bis 55 Gew.-%-ige Lösung im in Schritt b) verwendeten organischen Lösungsmittel eingesetzt.

Phosgen kann in dem Verfahrensschritt b) flüssig, gasförmig oder gelöst in einem inerten Lösungsmittel eingesetzt werden.

In Schritt b) des erfindungsgemäßen Verfahrens bevorzugt verwendbare inerte organische Lösungsmittel sind alle bekannten Lösungsmittel, die Polycarbonat bei Temperaturen um 20°C zu mindestens 5 Gew.-% zu lösen in der Lage sind sowie deren Gemische. Geeignete Lösungsmittel sind aromatische und/oder aliphatische chlorierte Kohlenwasserstoffe, bevorzugt Dichlormethan, Trichlorethylen, 1,1,1-Trichlorethan, 1,1,2-Trichlorethan und Chlorbenzol und deren Gemische. Es können jedoch auch aromatische Kohlenwasserstoffe wie Benzol, Toluol, m-/p-/o-Xylol oder aromatische Ether wie Anisol oder Mischungen aus diesen untereinander oder mit den vorangehend genannten chlorierten Lösungsmitteln verwendet werden. Bevorzugt sind beispielsweise Dichlormethan, Toluol, die verschiedenen Dichlorethane und Chlorpropane, Chlorbenzol und Chlortoluol oder Mischungen als diesen. Vorzugsweise wird Dichlormethan oder ein Gemisch aus Dichlormethan und Chlorbenzol eingesetzt. Besonders bevorzugt sind Dichlormethan und Gemische aus Dichlormethan und Monochlorbenzol, in ganz besonders bevorzugten Ausführungsformen Gemische aus Dichlormethan und Monochlorbenzol im Verhältnis von 20:80 Gew.-Teilen bis 75:25 Gew.-Teilen.

Über die gesamte Reaktion wird vorzugsweise ein pH-Wert von 8,5 bis 14, besonders bevorzugt von 9,5 bis 13 eingestellt. Dies geschieht dadurch, dass einmal zu Beginn die zum Lösen der Bisphenole notwendige Menge Alkalilauge eingesetzt wird und darüber hinaus im Laufe der Reaktion noch weitere Nachdosierungen vorgenommen werden können. Der pH-Wert der wässrigen Phase sollte bevorzugt über gegebenenfalls einmalige oder mehrfache Nachdosierung von Alkalilauge während und nach der Phosgendosierung im alkalischen Bereich bevorzugt von 8,5 bis 12, besonders bevorzugt von 9,5 bis 12 gehalten werden, während er nach der Katalysatorzugabe bei 10 bis 14, besonders bevorzugt bei 10 bis 13 liegen sollte. Gegebenenfalls kann die Nachdosierung der Alkalilauge auch in Form entsprechender Nachdosierung von Bisphenol-Lösung in Alkalilauge erfolgen.

Die nach dem erfindungsgemäßen Verfahren erhältlichen Polycarbonate können als beliebige Formkörper oder auch Platten und Folien in bekannter Weise technisch eingesetzt werden, beispielsweise im Automobilsektor oder in optischen Anwendungen, optischen und magnetooptischen Speichermedien.

Die Reaktionsführung für Schritt b) kann kontinuierlich oder diskontinuierlich erfolgen, sie erfolgt bevorzugt kontinuierlich und besonders bevorzugt in einer Pfropfenströmung ohne große Rückvermischung. Dies kann beispielsweise in Rohrreaktoren geschehen. Die Durchmischung der zwei Phasen (wässrige und organische Phase) kann durch bekannte Mischorgane, wie z.B. eingebaute Rohrblenden, statische Mischer und/oder beispielsweise Pumpen realisiert werden.

Die Reaktion gemäß Schritt b) erfolgt besonders bevorzugt zweistufig.

Im bevorzugten Verfahren wird in Schritt b) Phosgen in Bezug auf das Bisphenol im MolVerhältnis von 1 : 1,12 bis 1 : 2,22, vorzugsweise von 1 : 1,14 bis 1 : 1,20 eingesetzt. Das Lösungsmittel wird so zugemischt, dass das Polycarbonat in einer 5 bis 60 Gew.-%igen Lösung, bevorzugt 20 bis 45 Gew.%igen Lösung nach der Reaktion vorliegt.

Insbesondere bei kontinuierliche Reaktionsführung für Schritt b) kann die gesamte Reaktion in Schritt b), d.h. Umsetzung von Phosgen mit Bisphenol(en) und weitere Aufkondensation, in Rührkesseln, Rohrreaktoren, Umpumpreaktoren oder Rührkesselkaskaden oder deren Kombinationen erfolgen, wobei es besonders vorteilhaft ist, wenn durch Verwendung von Mischorganen wässrige und organische Phase so gemischt werden, dass wässrige und organische Phase sich möglichst erst dann entmischen, wenn das Synthesegemisch ausreagiert hat, d.h. kein verseifbares Chlor von Phosgen oder Chlorkohlensäureestern mehr enthalten ist.

In einer besonders bevorzugten Ausführungsform von Schritt b) des erfindungsgemäßen Verfahrens wird das kontinuierliche Zusammenführen der organischen Phase und der wässrigen Phase in einem Apparatesystem aus Wärmetauscher mit Umpumpschleife sowie nachfolgend einem oder mehreren Verweilkessel(n) und einem oder mehreren Verweilzeitrohr(en) (Rohrreaktor(en)), gegebenenfalls unter Verwendung eines oder mehrerer Mischorgane, durchgeführt. Zur optimalen Durchführung können dabei in dem Apparatesystem spezielle Reaktionsbedingungen eingestellt und dabei im Umpumpreaktor ein spezielles Verhältnis von zudosierten Ausgangskomponenten zu der Menge an umgepumpter Reaktionsemulsion eingestellt werden. Solche Verfahren sind dem Fachmann bekannt und beispielsweise in EP-A 1 249 463 beschrieben.

Das so kontinuierlich erhaltene Polycarbonat zeichnet sich insbesondere durch sehr gute Produktqualität - beispielsweise gemessen am Yellowness-Index (YI) und am Gehalt phenolischen OH-Endgruppen - aus und es kann gleichzeitig eine geringer Belastung des Abwassers durch Restorganika (Restphenolgehalt) erreicht werden , was vorteilhaft für die Elektrolyse des Abwassers ist.

Nach der Reaktion b) wird in Schritt c) bevorzugt die organische, den Polycarbonat enthaltende Phase üblicherweise mit einer wässrigen Flüssigkeit gewaschen und nach jedem Waschvorgang von der wässrigen Phase soweit wie möglich getrennt. Die Wäsche erfolgt bevorzugt mit entsalztem Wasser. Die Polycarbonatlösung ist nach der Wäsche und Abtrennung der Waschflüssigkeit üblicherweise trüb. Als Waschflüssigkeit werden wässrige Flüssigkeiten zur Abtrennung des Katalysators, z.B. eine verdünnte Mineralsäure wie HCl oder H₃PO₄, und zur weiteren Reinigung vollentsalztes Wasser eingesetzt. Die Konzentration von HCl oder H₃PO₄ in der Waschflüssigkeit kann beispielsweise 0,5 bis 1,0 Gew.-% betragen. Die organische Phase wird beispielhaft und vorzugsweise wenigstens zweimal gewaschen.

Als Phasentrennvorrichtungen zur Abtrennung der Waschflüssigkeit von der organischen Phase können grundsätzlich bekannte Trenngefäße, Phasenseparatoren, Zentrifugen oder Coalescer oder auch Kombinationen dieser Einrichtungen verwendet werden.

Man erhält so ohne Berücksichtigung des noch abzutrennenden Lösungsmittels überraschend hohe Reinheitsgrade des Polycarbonats von >99,85 %.

In einer bevorzugten Ausführungsform des erfindungsgemäßen Verfahrens können die in Schritt c) abgetrennten Waschflüssigkeiten gegebenenfalls nach Trennung von Katalysatorresten und/oder organischen Lösungsmittelresten wieder in das erfindungsgemäße Verfahren zurückgeführt werden.

Dabei kann die Abtrennung und Aufarbeitung des in Schritt b) gebildeten Polycarbonats gemäß Schritt c) bevorzugt wenigstens die folgenden Schritte umfassen:
aa) Trennung von Polycarbonat-enthaltender organischer Phase und wässriger Alkalichlorid-haltiger Reaktionsabwasserlösung
bb) wenigstens einmaliges, bevorzugt wenigstens zweimaliges, besonders bevorzugt fünfmaliges Waschen der in Schritt aa) erhaltenen Polycarbonat-enthaltenden organischen Phase und Abtrennen der jeweiligen Waschflüssigkeit.

Gegebenenfalls kann es erforderlich sein, wenigstens eine der gemäß Schritt c)bb) erhaltenen Waschflüssigkeit(en) von Katalysatorresten und gegebenenfalls organischen Lösungsmittelresten durch Einstellung des pH Wertes auf mindestens 9, bevorzugt mindestens 10, besonders bevorzugt 10 bis 11, durch Zugabe wenigstens einer basischen Verbindung zu trennen und einer anschließenden Extraktion mit wenigstens einem inerten organischen Lösungsmittel oder bevorzugt einem anschließenden Strippen der Lösung mit Wasserdampf zu unterziehen. Als basische Verbindungen zur Einstellung des pH-Wertes eignen sich beispielsweise Alkali- oder Erdalkalihydroxide oder -carbonate. Die basischen Verbindungen können in fester Form oder in Form ihrer wässrigen Lösungen eingesetzt werden. Bevorzugt werden Alkalilaugen, besonders bevorzugt Natronlauge verwendet.

Vorzugsweise kann wenigstens ein Teil der Waschflüssigkeit(en) aus Schritt c)bb) als Teilersatz des Wassers zur Herstellung, insbesondere zur Einstellung der Konzentration der Natronlauge für Schritt b) verwendet werden. In einer bevorzugten Ausführungsform des erfindungsgemäßen Verfahrens kann wenigstens ein Teil der Waschflüssigkeit(en) aus Schritt c)bb) zur Verdünnung der gemäß Schritt e) hergestellten Alkalilauge verwendet werden, bevor diese in die Herstellung von Polycarbonat gemäß Schritt b) zurückgeführt wird.

Die bevorzugte Ausführungsform des erfindungsgemäßen Verfahrens, bei der die in Schritt c) abgetrennten Waschflüssigkeiten wieder in das erfindungsgemäße Verfahren zurückgeführt werden, bietet den zusätzlichen Vorteil geringerer Abwasseremission.

Nach der Synthese des Polycarbonats wird das Polycarbonat in Form seiner Lösung in dem bei der Synthese verwendeten organischen Lösungsmittel oder Lösungsmittelgemisch, beispielsweise Methylenchlorid oder Methylenchlorid/Chlorbenzol, abgetrennt.

Die Isolierung des Polycarbonats aus der Lösung kann durch Verdampfen des Lösungsmittels mittels Temperatur, Vakuum oder eines erhitzten Schleppgases erfolgen. Andere Isolierungsmethoden sind beispielsweise Kristallisation und Fällung.

Erfolgt die Konzentrierung der Polycarbonatlösung und eventuell auch die Isolierung des Polycarbonats durch Abdestillieren des Lösungsmittels, gegebenenfalls durch Überhitzung und Entspannung, so spricht man von einem "Flash-Verfahren". Ein solches Verfahren ist dem Fachmann bekannt und beispielsweise in "Thermische Trennverfahren", VCH Verlagsanstalt 1988, S. 114 beschrieben. Wird statt dessen ein geheiztes Trägergas zusammen mit der einzudampfenden Lösung versprüht, so spricht man von einer "Sprühverdampfung/Sprühtrocknung", welche beispielhaft in Vauck, "Grundoperationen chemischer Verfahrenstechnik", Deutscher Verlag für Grundstoffindustrie 2000, 11.Auflage, S. 690 beschrieben ist. Alle diese Verfahren sind in der Patentliteratur und in Lehrbüchern beschrieben und dem Fachmann geläufig.

Bei der Entfernung des Lösungsmittels durch Temperatur (Abdestillieren) bzw. dem technisch effektiveren Flash-Verfahren erhält man hochkonzentrierte Polycarbonatschmelzen. Beim Flashverfahren werden Polymerlösungen wiederholt unter leichtem Überdruck auf Temperaturen oberhalb des Siedepunktes unter Normaldruck erhitzt und diese, bezüglich des Normaldruckes, überhitzten Lösungen anschließend in ein Gefäß mit niedrigerem Druck, z.B. Normaldruck, entspannt. Es kann dabei von Vorteil sein, die Aufkonzentrationsstufen, oder anders ausgedrückt die Temperaturstufen der Überhitzung nicht zu groß werden zu lassen, sondern lieber ein zwei- bis vierstufiges Verfahren zu wählen.

Aus den so erhaltenen hochkonzentrierten Polycarbonatschmelzen können die Reste des Lösungsmittels entweder direkt aus der Schmelze mit Ausdampfextrudern (vgl. z.B. BE-A 866 991, EP-A 0 411 510, US-A 4 980 105, DE-A 33 32 065), Dünnschichtverdampfern (vgl. z.B. EP-A 0 0267 025), Fallfilmverdampfern, Strangverdampfern oder durch Friktionskompaktierung (vgl. z.B. EP-A 0 460 450), gegebenenfalls auch unter Zusatz eines Schleppmittels, wie Stickstoff oder Kohlendioxid oder unter Verwendung von Vakuum (vgl. z.B. EP-A 0 039 96, EP-A 0 256 003, US-A 4 423 207), entfernt werden, alternativ auch durch anschließende Kristallisation (vgl. z.B. DE-A 34 29 960) und/oder Ausheizen der Reste des Lösungsmittels in der festen Phase (vgl. z.B. US-A 3 986 269, DE-A 20 53 876). Auch diese Verfahren und die hierzu erforderlichen Vorrichtungen sind in der Literatur beschrieben und dem Fachmann geläufig.

Polycarbonat-Granulate können - wenn möglich - durch direktes Abspinnen der Schmelze und anschließender Granulierung oder aber durch Verwendung von Austragsextrudern von denen in Luft oder unter Flüssigkeit, meist Wasser, abgesponnen wird, erhalten werden. Werden Extruder verwendet, so kann man der Polycarbonatschmelze vor dem Extruder, gegebenenfalls unter Einsatz von statischen Mischern oder durch Seitenextruder in diesem Extruder, Additive zusetzen.

Alternativ kann die Polycarbonatlösung einer Sprühverdampfung unterzogen werden. Bei einer Versprühung wird die Polycarbonatlösung gegebenenfalls nach Erhitzung entweder in ein Gefäß mit Unterdruck verdüst oder mittels einer Düse mit einem erhitzten Trägergas, z.B. Stickstoff, Argon oder Wasserdampf in ein Gefäß mit Normaldruck verdüst. In beiden Fällen erhält man in Abhängigkeit von der Konzentration der Polymerlösung Pulver (verdünnt) oder Flocken (konzentriert) des Polymers, aus dem gegebenenfalls auch die letzten Reste des Lösungsmittels wie oben entfernt werden müssen. Anschließend kann mittels eines Compoundierextruders und anschließender Abspinnung Granulat erhalten werden. Auch hier können Additive, wie oben beschrieben, in der Peripherie oder dem Extruder selbst, zugesetzt werden. Oftmals kann es erforderlich sein, vor der Extrusion aufgrund der geringen Schüttdichte der Pulver und Flocken einen Kompaktierungsschritt für das Polymerpulver zu durchlaufen.

Aus der gewaschenen und gegebenenfalls noch aufkonzentrierten Polycarbonatlösung kann durch Zugabe eines Nichtlösungsmittels für Polycarbonat das Polymer weitgehend ausgefällt werden. Die Nichtlösungsmittel wirken dabei als Fällungsmittel. Hierbei ist es vorteilhaft, erst eine geringe Menge des Nichtlösungsmittels zuzugeben und gegebenenfalls auch Wartezeiten zwischen den Zugaben der Chargen an Nichtlösungsmittel einzulegen. Es kann außerdem von Vorteil sein, verschiedene Nichtlösungsmittels einzusetzen. Verwendung als Fällungsmittel finden hier z.B. aliphatische oder cycloaliphatische Kohlenwasserstoffe, insbesondere Heptan, i-Octan oder Cyclohexan, Alkohole wie z.B. Methanol, Ethanol oder i-Propanol, Ketone, wie z.B. Aceton, oder Mischungen aus diesen. Bei der Fällung wird in der Regel die Polymerlösung langsam dem Fällungsmittel zugesetzt. Die so erhaltenen Polycarbonate werden wie bei der Sprühverdampfung beschrieben zu Granulat verarbeitet und gegebenenfalls additiviert.

Nach anderen Verfahren werden Fällungs- und Kristallisations-Produkte oder amorph erstarrte Produkte in feinkörniger Form durch Überleiten von Dämpfen eines oder mehrer Nichtlösungsmittel für Polycarbonat, unter gleichzeitiger Erhitzung unterhalb der Glastemperatur kristallisiert und weiter zu höheren Molekulargewichten aufkondensiert. Handelt es sich dabei um Oligomere gegebenenfalls mit unterschiedlichen Endgruppen (Phenolische und Kettenabbrecherenden), so spricht man von Festphasenaufkondensation.

Die so gereinigten Polycarbonate zeichnen sich durch sehr gute Produkteigenschaften aus, so dass hieraus anschließend Formteile in exzellenter Qualität hergestellt werden kann.

Die verbleibende Alkalichlorid-haltige Reaktionsabwasserlösung gemäß Schritt c) wird vorteilhafterweise von leicht flüchtigen organischen Verunreinigungen, wie z.B. Reste des bei der Synthese verwendeten organischen Lösungsmittels und gegebenenfalls Katalysator beispielsweise durch Destillation oder Wasserdampfstrippen befreit. Es verbleibt dann ein Abwasser mit einem hohen Gehalt an gelöstem Natriumchlorid (5-10 Gew.-%) und gelösten Natriumcarbonaten (0,3-1,5 Gew.-%). Die Carbonate entstehen dabei z.B. durch Hydrolyse des Phosgens als Nebenreaktion der Polycarbonatherstellung. Außerdem ist das Abwasser mit organischen Verbindungen belastet, z.B. mit Phenolen (z.B. unsubstituiertes Phenol, Alkylphenole).

Die Behandlung des vorgereinigten Abwassers mit Adsorbentien erfolgt dann bevorzugt mit Aktivkohle.

Gemäß einem bevorzugten Verfahren wird die Einstellung (Erniedrigung) des pH-Wertes im Prozessschritt d) mit Salzsäure oder Chlorwasserstoff durchgeführt. Der grundsätzlich denkbare, aber im vorliegenden Verfahren unerwünschte Einsatz der preiswerteren Schwefelsäure würde dazu führen, dass bei der pH-Erniedrigung Natriumsulfat entstünde, das bei der anschließenden Elektrolyse im Anolytkreislauf angereichert werden würde. Da z.B. die Ionenaustauschermembranen gemäß Herstellerangaben nur bis zu einer bestimmten Natriumsulfat-Konzentration im Anolyten betrieben werden dürfen, müsste mehr Anolyt ausgeschleust werden als bei Einsatz von Salzsäure oder Chlorwasserstoff, dessen Reaktionsprodukt das gewünschte Natriumchlorid ist.

Das Verfahren der Alkalichlorid-Elektrolyse wird im folgenden näher beschrieben. Die nachstehende Beschreibung ist in Bezug auf die Elektrolyse von Natriumchlorid beispielhaft anzusehen, da im Verfahren wie bereits oben ausgeführt wurde grundsätzlich jedes Alkalichlorid zum Einsatz kommen kann (insbesondere Li-, Na-, KCl), die Verwendung von Natriumchlorid bzw. Natronlauge in den vorgehenden Stufen aber die bevorzugte Ausführung des Verfahrens ist.

Üblicherweise werden z.B. zur Elektrolyse von Natriumchlorid-haltigen Lösungen Membranelektrolyseverfahren eingesetzt (siehe hierzu Peter Schmittinger, CHLORINE, Wiley-VCH Verlag, 2000). Hierbei wird eine zweigeteilte Elektrolysezelle eingesetzt, die aus einem Anodenraum mit einer Anode und einem Kathodenraum mit einer Kathode besteht. Anoden- und Kathodenraum werden von einer Ionenaustauschermembran getrennt. In den Anodenraum wird eine Natriumchlorid-haltige Lösung mit einer Natriumchlorid-Konzentration von üblicherweise mehr als 300 g/l eingeführt. An der Anode wird das Chlorid-Ion zu Chlor oxidiert, das mit der abgereicherten Natriumchlorid-haltigen Lösung (ca. 200 g/l) aus der Zelle geführt wird. Die Natrium-Ionen wandern unter Einfluss des elektrischen Feldes durch die Ionenaustauschermembran in den Kathodenraum. Bei dieser Wanderung nimmt jedes mol Natrium je nach Membran zwischen 3,5 und 4 mol Wasser mit. Dies führt dazu, dass der Anolyt an Wasser verarmt. Im Gegensatz zum Anolyten wird auf der Kathodenseite durch die Elektrolyse von Wasser zu Hydroxid-Ionen und Wasserstoff Wasser verbraucht. Das mit den Natrium-Ionen in den Katholyten gelangende Wasser reicht aus, um die Natronlauge-Konzentration im Auslauf auf 31-32 Gew.-% zu halten, dies bei einer Einlaufkonzentration von 30% und einer Stromdichte von 4 kA/m². Im Kathodenraum wird Wasser elektrochemisch reduziert, wobei Hydroxid-Ionen und Wasserstoff entstehen.

Alternativ kann als Kathode auch eine Gasdiffusionselektrode eingesetzt werden, an der Sauerstoff mit Elektronen zu Hydroxid-Ionen umgesetzt wird, wobei kein Wasserstoff entsteht. Mit den über die Ionenaustauschermembran in den Kathodenraum gelangten Natrium-Ionen bilden die Hydroxid-Ionen Natronlauge. In die Kathodenkammer wird üblicherweise eine Natronlauge mit einer Konzentration von 30 Gew.-% zugeführt und eine Natronlauge mit einer Konzentration von 31-32 Gew.-% abgeführt. Ziel ist es eine möglichst hohe Konzentration an Natronlauge zu erreichen, da üblicherweise die Natronlauge als 50 Gew.-%ige Lauge gelagert oder transportiert wird. Handelsübliche Membranen sind jedoch derzeit nicht beständig gegen eine Lauge mit einer höheren Konzentration als 32 Gew.-%, so dass die Natronlauge durch thermische Eindampfung aufkonzentriert werden muss.

Im Falle der Natriumchlorid-Elektrolyse wird über diese Natriumchlorid-haltige Lösung zusätzliches Wasser in den Anolyten eingebracht, jedoch nur Wasser über die Membran in den Katholyten ausgetragen. Wird mehr Wasser über die Natriumchlorid-haltige Lösung eingebracht als zum Katholyten transportiert werden kann, verarmt der Anolyt an Natriumchlorid und die Elektrolyse kann nicht kontinuierlich betrieben werden. Bei sehr geringen Natriumchlorid-Konzentrationen würde die Nebenreaktion der Sauerstoffbildung einsetzen.

Um maximale Mengen an Natriumchlorid-haltigen Lösungen wirtschaftlich der Natriumchlorid-Elektrolyse zuzuführen, kann es nützlich sein, dass der Wassertransport über die Membran erhöht wird. Dieser kann durch Auswahl geeigneter Membranen erfolgen, wie in der US-A-4025405 beschrieben. Der Effekt eines erhöhten Wassertransportes ist, dass auf die sonst übliche Wasserzugabe zur Aufrechterhaltung der Laugekonzentration verzichtet werden kann.

Gemäß der US-A-3 773 634 kann bei hohem Wassertransport durch die Membran die Elektrolyse dann betrieben werden, wenn eine Laugekonzentration von 31 bis 43 Gew.-% und eine Natriumchlorid-Konzentration von 120 bis 250 g/l eingesetzt wird.

Nachteil beider Verfahren ist die niedrigere Stromausbeute dieser Verfahren.

Gemäß dem bevorzugten Verfahren erfolgt die Abtrennung d) des Natriumchlorid-haltigen Reaktionsabwassers nach der Phasentrennung und der Entfernung des Lösungsmittels und gegebenenfalls verwendeten Katalysators, durch Strippung mit Wasserdampf und, nach der pH-Einstellung, durch eine Aktivkohlebehandlung.

Hiernach kann das Alkalichlorid-haltige Abwasser direkt der Elektrolyse e) zugeführt werden.

Gegenüber dem Stand der Technik (WO 03/70639 A1), in dem max. 13 % des im Abwasser der Polycarbonat-Produktion vorhandenen Natriumchlorids bei der NaCl-Elektrolyse eingesetzt werden kann, können durch das erfindungsgemäße Verfahren mehr als 13 % des Natriumchlorids aus dem Abwasser zurück gewonnen werden.

Eine weitere bevorzugte Verfahrensvariante ist, dass dem Alkalichlorid-haltigen Abwasser durch ein Aufkonzentrierungsverfahren Wasser entzogen wird. Bevorzugt ist daher ein Verfahren, **dadurch gekennzeichnet, dass** die Alkalichlorid-haltige Lösung aus d) vor der Elektrolyse e) mittels Membrandestillationsverfahren, osmotische Destillation oder Umkehrosmose aufkonzentriert wird.

Hierbei können beispielsweise die Umkehrosmose oder besonders bevorzugt die Membrandestillation oder Membrankontaktoren eingesetzt werden (siehe MELIN; RAUTENBACH, Membranverfahren; SPRINGER, BERLIN, 2003). Durch Kombination von erfindungsgemäßem Betrieb der Elektrolysezellen und Aufkonzentrierungsverfahren können theoretisch bis zu 68 % des Natriumchlorids aus dem Abwasser wieder gewonnen werden. Dies gilt für den Fall, dass die Natriumchlorid-Elektrolyse nur das benötigte Chlor für die Phosgenherstellung und die benötigte Natronlauge für die Polycarbonatherstellung produziert und kein Chlor für andere Anwendungen bereitstellt.

Das neue Verfahren kann auch mit einer Alkalichlorid-Elektrolyse durchgeführt werden, bei der kein Wasserstoff an der Kathode erzeugt wird, sondern die Kathode durch eine Gasdiffusionselektrode ersetzt wird, an der Sauerstoff zu Hydroxid-Ionen reduziert wird.

Wenn z.B. in einem Verbundstandort kein Wasserstoff für chemische Reaktionen benötigt wird, kann auf das Zwangsanfallprodukt Wasserstoff verzichtet werden. Vorteil ist eine Energieeinsparung bei der Elektrolyse, die durch die niedrigere Elektrolysespannung bei Einsatz einer Gasdiffusionselektrode zurückzuführen ist.

Die aus der Polycarbonat-Produktion gelangende Natriumchlorid-haltige Lösung weist üblicherweise einen Natriumchlorid-Gehalt von bis zu 10 Gew.-% auf, soweit es sich um das Reaktionsabwasser handelt. Wird das Reaktionsabwasser mit dem Waschwasser vereinigt so beträgt die NaCl-Konzentration beispielsweise ca. 6 Gew.-%. Liefert die Elektrolyse das Chlor und die Natronlauge ausschließlich für die Polycarbonat-Produktion, so kann das Natriumchlorid-haltige Abwasser nur zu einem geringen Teil in der Elektrolyse eingesetzt werden. So können bei den üblichen Ionenaustauschermembranen und den Standard-betriebsparametern der Natriumchlorid-Elektrolyse nur ca. 7 % des Natriumchlorids einer 6 Gew.-%igen Natriumchlorid-haltigen Polycarbonat-Abwasserlösung eingesetzt werden. Die Standardbetriebsparameter der NaCl-Elektrolyse sind eine Solekonzentration im Ablauf von 200 bis 240g/l und eine NaOH-Konzentration von 31-32 Gew.-%. Ein vollständiges Recycling des anfallenden Natriumchlorids ist daher bisher nicht möglich. Eine Aufkonzentrierung durch thermische Verdampfung des Wassers ist derzeit nicht wirtschaftlich, da das Natriumchlorid als sehr preiswertes Produkt zur Verfügung steht.

Mit dem erfindungsgemäßen Verfahren können deutlich mehr als 13 % des Natriumchlorids aus anfallenden Abwässern, bei einer Konzentration von 10 Gew.-% recycelt werden, sofern die Natriumchlorid-Elektrolyse ausschließlich das Chlor und die Natronlauge für die Polycarbonat-Produktion bereitstellt. Üblicherweise werden Natriumchlorid-Elektrolysen an chemischen Verbundstandorten mit mehreren Chlorverbrauchern betrieben, so dass nicht von allen Verbrauchern eine Natriumchlorid-haltige Lösung zum Recycling bereit steht. Der Anteil an wieder verwertbarem Natriumchlorid aus dem Abwasser steigt, wenn die Natriumchlorid-Elektrolyse die Natronlauge und das Chlor nicht ausschließlich für die Polycarbonat-Produktion bereitstellen muss.

Eine weitere bevorzugte Variante des neuen Verfahrens ist, dass das Abwasser der Polycarbonatherstellung durch festes Alkalichlorid aufkonzentriert und der Alkalichlorid-Elektrolyse zugeführt wird. Hierdurch könnten mehr als 13 % des Alkalichlorids aus dem Polycarbonat-Abwasser wieder verwendet werden.

Dies setzt jedoch voraus, dass das Chlor und die Alkalilauge nicht ausschließlich für die Polycarbonat-Produktion eingesetzt wird.

Besonders bevorzugt wird ein Alkalichlorid-haltiges Abwasser bei der Elektrolyse e) eingesetzt bzw. zugeführt dessen pH-Wert kleiner als 7 beträgt. Die pH-Wert Einstellung erfolgt vorzugsweise mit Salzsäure, kann aber auch mit gasförmigem Chlorwasserstoff erfolgen.

Gemäß einem weiteren bevorzugten Verfahren wird die NaCl-Elektrolyse so betrieben, dass die NaCl-Lösung, die aus der Zelle gelangt, eine NaCl-Konzentration von weniger als 200 g/l aufweist. Parallel hierzu kann die aus der Zelle ablaufende Laugenkonzentration weniger als 30 Gew.-% betragen.

Der Wassertransport über die Membran hängt nicht nur von den Betriebsparametern ab, sondern auch von dem eingesetzten Membran-Typ. Gemäß dem erfindungsgemäßen Verfahren werden bevorzugt solche Ionenaustauschermembranen eingesetzt, die unter den erfindungsgemäßen Bedingungen der Natriumchlorid- und Laugekonzentration einen Wassertransport durch die Membran von mehr als 4,5 mol Wasser je mol Natrium ermöglichen.

Die Stromdichte wird dabei auf die Membranfläche berechnet und beträgt insbesondere 2 bis 6 kA/m². Besonders bevorzugt werden Anoden mit größere Oberfläche eingesetzt. Unter Anoden mit größerer Oberfläche sind solche zu verstehen, bei denen die physikalische Oberfläche deutlich höher ist als die projektierte Oberfläche. Anoden mit größerer Oberfläche sind z.B. Schaum- oder Filz-artig aufgebaute Elektroden. Hierdurch wird anodisch eine sehr große Elektrodenoberfläche angeboten und die lokale Stromdichte stark erniedrigt. Die Oberfläche der Anode ist bevorzugt so zu wählen, das die lokale Stromdichte bezogen auf die physikalische Oberfläche der Elektrode kleiner als 3 kA/m² beträgt. Je größer die Oberfläche und je niedriger die lokale Stromdichte, desto gering kann die Natriumchlorid-Konzentration in der Sole gewählt werden und desto höher ist der Anteil an Natriumchlorid aus dem Abwasser, der recycelt werden kann.

Der pH-Wert des Alkalichlorid-haltigen Abwassers sollte vor der Elektrolyse e) bevorzugt kleiner als 7 betragen, besonders bevorzugt von 0,5 bis 6.

Die Alkalichlorid-Elektrolyse sollte so betrieben werden, dass die Alkalichlorid-Konzentration der aus der Zelle gelangenden Alkalichlorid-Lösung zwischen 100 bis 280 g/l Natriumchlorid und/oder dass die Konzentration der Alkalilauge, die aus der Zelle gelangt 13 bis 33 Gew.-% beträgt.

Besonders bevorzugt sind Konzentrationen, die den Betrieb der Zelle bei niedrigeren Spannungen ermöglichen. Hierzu sollte die Konzentration der aus der Zelle gelangenden Alkalichlorid-Lösung vorzugsweise zwischen 110 bis 220 g/l Alkalichlorid und/oder die Konzentration der Alkalilauge, die aus der Zelle gelangt 20 bis 30 Gew.-% betragen.

Die eingesetzten Ionenaustauschermembranen bei der Elektrolyse sollten bevorzugt einen Wassertransport je mol Natrium von mehr als 4,0 mol H₂O/mol Natrium aufweisen, besonders bevorzugt 5,5 bis 6,5 mol H₂O/mol Natrium.

Das Verfahren wird bevorzugt so betrieben, dass die Elektrolyse e) bei einer Temperatur von 70 bis 100°C, vorzugsweise bei 80 bis 95°C betrieben wird.

Die Elektrolyse wird bei einem Absolutdruck von 1 bis 1,4 bar, bevorzugt bei einem Druck von 1,1 bis 1,2 bar betrieben.

Die Druckverhältnisse zwischen Anoden- und Kathodenraum werden insbesondere so gewählt, dass der Druck im Kathodenraum höher ist als der Druck im Anodenraum.

Der Differenzdruck zwischen Kathoden- und Anodenraum sollte in einem besonders bevorzugten Verfahren 20 bis 150 mbar, vorzugsweise 30 bis 100 mbar betragen.

Bei niedrigeren Alkalichlorid-Konzentrationen können auch spezielle Anodencoatings eingesetzt werden. Insbesondere kann das Coating der Anode neben Rutheniumoxid auch weitere Edelmetallkomponenten der 7. und 8. Nebengruppe des Periodensystems der Elemente enthalten. Beispielsweise kann das Anodencoating mit Palladiumverbindungen dotiert werden. Ebenso sind Coatings auf Basis von Diamanten einsetzbar.

Die in dieser Anmeldung aufgeführten allgemeinen oder in Vorzugsbereichen aufgeführten Parameter bzw. Erläuterungen können auch untereinander, also zwischen den jeweiligen Bereichen und Vorzugsbereichen beliebig kombiniert werden.

Die nachfolgenden Beispiele sollen die vorliegende Erfindung illustrieren ohne sie jedoch einzuschränken.

### Beispiele

Die Beispiele sollen das erfindungsgemäße Verfahren anhand des bei der Herstellung von Polycarbonat anfallenden Natriumchlorid-haltigen Abwassers darstellen.

### Beispiel 1

### Zusatz von Natriumchlorid-haltigem Reaktionsabwasser in die Natriumchlorid-Elektrolyse-Zugabe einer 10 Gew.-%igen Natriumchlorid-Lösung aus der Polycarbonat-Herstellung

In einem Umpumpreaktor wurden vor der Pumpe über ein T-Stück 24.000 kg/h einer alkalischen Bisphenol A-Lösung, die 15 Gew.-% Bisphenol A (BPA) und 2,1 mol Natronlauge pro mol BPA enthält, sowie über ein weiteres T-Stück 1848 kg/h Phosgen gelöst in 20400 kg/h Lösungsmittel, welches aus 50 Gew.-% Methylenchlorid und 50 Gew.-% Monochlorbenzol bestand, eindosiert.

Zur Aufrechterhaltung der Alkalität wurden 360 kg/h 32 %ige Natronlauge zudosiert und das Reaktionsgemisch über einen Wärmetauscher und einen ungerührten Verweilzeitbehälter zurück zur Pumpe geleitet, wobei die oben genannten Stoffströme zudosiert wurden.

Mittels einer Mengenmessung wurde die umgepumpte Menge zu 260 m³/h bestimmt.

Die Temperatur betrug 36°C.

Eine Teilmenge der Emulsion, die so groß war wie die zufließenden Rohstoffe, wurde vor den Dosierstellen für BPA und Phosgen aus dem Verweilzeitbehälter einer weiteren Pumpe zugeleitet und durch einen Rohrreaktor gepumpt. Diesem Strom wurden 1050 kg/h Natronlauge (32 Gew.-%) sowie 134 kg/h p-tert.-Butylphenol, gelöst in 536 kg Lösungsmittelgemisch, zudosiert. Nach einer Verweilzeit von 10 Min. wurden 18 kg/h N-Ethylpiperidin in Form einer 4,8 %igen Lösung im Lösungsmittelgemisch (50 Teile Methylenchlorid und 50 Teile Monochlorbenzol) zudosiert und die Emulsion mittels einer weiteren Pumpe durch einen weiteren Rohrreaktor gepumpt.

Nach einer Verweilzeit von weiteren 10 Min. wurde die Emulsion in einem Trenngefäß getrennt und die Polycarbonatlösung nach bekannten Verfahren z.B. durch Zentrifugentechnik, elektrolytfrei gewaschen.

Die Polycarbonatlösung wurde in Eindampfanlagen einkonzentriert und auf einem Ausdampfextruder von Restlösungsmittel befreit.

Am Polycarbonatgranulat wurden folgende analytische Daten bestimmt:

| | |
|---|---|
| Yellowness Index (YI) | = 1,35 (gemessen nach ASTM E 313) |
| Relative Viskosität (ηᵣₑₗ) | = 1,195 (gemessen nach ISO 1628/4) |
| Gehalt an phenolischen OH-Endgruppen | = 85 ppm (gemessen durch UV- Spektroskopie bei 546 nm nach Farbreaktion der phenolischen Endgruppen mit TiCl₄) |

Das Reaktionsabwasser wurde hier nicht mit den Waschphasen vereinigt und wurde durch Strippen mit Wasserdampf von Lösungsmittelresten und Katalysator befreit. Nach Neutralisierung mit Salzsäure und Behandlung mit Aktivkohle enthielt das Reaktionsabwasser 10 Gew.-% NaCl und weniger als 2 ppm freies BPA und Phenole, gemessen durch UV-Spektroskopie der wässrigen Phase bei 294 nm, z.B. in einem Spektrometer der Fa. Perkin-Elmer.

Es konnte ohne weitere Reinigung der Natriumchlorid-Elektrolysezelle zugeführt werden.

Die Elektrolyse wurde beispielhaft in einer Laborelektrolysezelle mit einer Anodenfläche von 0,01m² durchgeführt. Die Stromdichte betrug 4 kA/m², Temperatur Auslauf Kathodenseite 88°C, Temperatur Auslauf Anodenseite 89°C. Eingesetzt wurde eine Elektrolysezelle mit Standard Anoden- und Kathodencoating der Fa. DENORA, Deutschland. Eingesetzt wurde eine Ionenaustauschermembran der Fa. DuPont Nafion^{®} 982 WX. Die Elektrolysespannung betrug 3,02 V. Durch die Anodenkammer wurde eine Natriumchlorid-haltige Lösung mit einem Massenstrom von 1,0 kg/h umgepumpt. Die Konzentration der der Anodenkammer zugeführten Lösung betrug 25 Gew.-% NaCl. Aus der Anodenkammer konnte eine 20 Gew.-%ige NaCl-Lösung entnommen werden. Der aus der Anodenkammer entnommenen NaCl-Lösung wurden 0,125 kg/h an 10 Gew.-%-igen Reaktionsabwasser aus der Polycarbonatherstellung und 0,076 kg/h festes Natriumchlorid zugegeben. Die Lösung wurde anschließend wieder in die Anodenkammer eingespeist. Der Wassertransport über die Membran betrug 3,5 mol Wasser je mol Natrium. 1 % der aus der Zelle gelangenden NaCl-Lösung wurde verworfen, entsprechend 0,008 kg/h einer 20 Gew.-%-igen NaCl-haltigen Lösung.

Auf der Kathodenseite wurde eine Natronlauge mit einem Massenstrom von 1,107 kg/h umgepumpt. Die Konzentration der in die Kathodenseite eingespeisten Natronlauge betrug 30 Gew.-% NaOH, die aus der Kathodenseite entnommene Natronlauge hatte eine Konzentration von 31,9 Gew.-% NaOH. 0,188 kg/h der 31,9 Gew.-%igen Lauge wurden dem Volumenstrom entnommen, der Rest wurde mit 0,0664 kg/h Wasser aufgestockt und wieder in das Kathodenelement zurückgeführt.

14 % des umgesetzten Natriumchlorids stammen aus dem Polycarbonat-Reaktionsabwasser.

### Beispiel 2

### Zusatz von Natriumchlorid-haltigem Reaktionsabwasser in die Natriumchlorid-Elektrolyse mit Gasdiffusionselektrode - Zugabe einer 10 Gew.-%igen Natriumchlorid-Lösung (Reaktionsabwasser) aus der Polycarbonat-Herstellung

Das Abwasser entsprach der Qualität desjenigen gemäß Beispiel 1. Da für die Herstellung von Polycarbonat kein Wasserstoff benötigt wird, konnte auf die Bildung von Wasserstoff bei der Elektrolyse verzichtet werden. Die Elektrolyse wurde daher mit Gasdiffusionselektroden betrieben. Die Stromdichte betrugt 4 kA/m², Temperatur Auslauf Kathodenseite 88°C, Temperatur Auslauf Anodenseite 89 °C. Eingesetzt wurde eine Elektrolysezelle mit Standard Anoden-Coating der Fa. DENORA, Deutschland. Eingesetzt wurde eine Ionenaustauschermembran der Fa.DuPont, Nafion^{®} 982 WX. Die Elektrolysespannung betrug 2,11 V. Es wurden 0,65 kg/h einer 25 Gew.-%-igen NaCl-Lösung in die Anodenkammer eingespeist, die der Anodenkammer entnommenen Lösung enthielt 18 Gew.-% an NaCl. Der aus der Anodenkammer entnommenen NaCl-Lösung wurden 0,163 kg/h an 10 Gew.%-igem Reaktionsabwasser und 0,0715 kg/h festes Natriumchlorid zugegeben. Die Lösung wurde anschließend wieder in die Anodenkammer eingespeist. Der Wassertransport über die Membran betrug 4,9 mol Wasser je mol Natrium.

Auf der Kathodenseite wurde eine Natronlauge mit einem Massenstrom von 1,107 kg/h umgepumpt. Die Konzentration der in die Kathodenseite eingespeisten Natronlauge betrug 30 Gew.-% NaOH, die aus der Kathodenseite entnommen Natronlauge hatte eine Konzentration von 31,0 Gew.-% NaOH. 0,192 kg/h der 31,0 Gew.-%-igen Lauge wurden dem Volumenstrom entnommen, der Rest wurde mit 0,0345 kg/h Wasser aufgestockt und wieder in das Kathodenelement zurückgeführt.

Der Anteil an umgesetztem Natriumchlorid aus dem Polycarbonat-Reaktionsabwasser betrug 18,6 %.

### Beispiel 3

### Zusatz von Natriumchlorid-haltigem Reaktionsabwasser in die Natriumchlorid-Elektrolyse mit Gasdiffusionselektrode - Zugabe einer 10 Gew.-%igen Natriumchlorid-Lösung (Reaktionsabwasser) aus der Polycarbonat-Herstellung

Das Abwasser entsprach der Qualität desjenigen gemäß Beispiel 1. Da für die Herstellung von Polycarbonat kein Wasserstoff benötigt wird, konnte auf die Bildung von Wasserstoff bei der Elektrolyse verzichtet werden. Die Elektrolyse wurde daher mit Gasdiffusionselektroden betrieben. Die Stromdichte betrugt 4 kA/m², Temperatur Auslauf Kathodenseite 88°C, Temperatur Auslauf Anodenseite 89°C. Eingesetzt wurde eine Elektrolysezelle mit Standard Anoden-Coating der Fa. DENORA, Deutschland. Eingesetzt wurde eine Ionenaustauscher-membran der Fa.DuPont, Nafion^{®} 2030. Die Elektrolysespannung betrug 1,96 V. Es wurden 0,65 kg/h NaCl-Lösung in die Anodenkammer eingespeist, die Natriumchlorid-Konzentration der Anodenkammer zugeführten NaCl-Lösung betrug 25 Gew.%, die der Anodenkammer entnommenen Lösung betrug 16,3 Gew.-% an NaCl. Es wurden 1 % der aus der Anodenkammer entnommenen NaCl-haltigen Lösung verworfen, das heißt 0,00309 kg/h. Der aus der Anodenkammer entnommenen NaCl-Lösung wurden 0,173 kg/h an 10 Gew.-%-igem Reaktionsabwasser und 0,0703 kg/h festes Natriumchlorid zugegeben. Die Lösung wurde anschließend wieder in die Anodenkammer eingespeist. Der Wassertransport über die Membran betrug 5,26 mol Wasser je mol Natrium.

Auf der Kathodenseite wurde eine Natronlauge mit einem Massenstrom von 1,107 kg/h umgepumpt. Die Konzentration der in die Kathodenseite eingespeisten Natronlauge betrug 30 Gew.-% NaOH, die aus der Kathodenseite entnommen Natronlauge hatte eine Konzentration von 30,7 Gew.-% NaOH. 0,194 kg/h der 30,7 Gew.-%-igen Lauge wurden dem Volumenstrom entnommen, der Rest wurde mit 0,0263 kg/h Wasser aufgestockt und wieder in das Kathodenelement zurückgeführt.

Der Anteil an umgesetztem Natriumchlorid aus dem Polycarbonat-Reaktionsabwasser betrug 19,8 %.

### Beispiel 4

### Rückführung von Waschphasen aus der Polycarbonat-Aufarbeitung (Schritt c)) in die Polycarbonat-Herstellung - Zugabe einer Abwasserphase in die Polycarbonat-Herstellung

Die Durchführung erfolgte wie in Beispiel 1, mit dem Unterschied, dass nach Abtrennung der organischen von der wässrigen Alkalichlorid-haltigen Reaktionsabwasserlösung in Schritt c)aa) die organische Polycarbonat-enthaltende Lösung mit Wasser, 0,6 %-iger Salzsäure und anschließend mehrmals mit Wasser gewaschen wurde.

Die einzelnen oder vereinigten Waschphasen aus der Polycarbonat-Aufarbeitung wurden mit wässriger NaOH-Lösung auf pH 10 eingestellt und anschließend durch Extraktion mit Methylenchlorid oder durch Strippen mit Wasserdampf von Lösungsmittelresten und Katalysator befreit. Die nach der Phasentrennung erhaltenen Wasserphasen können als Teilersatz des Wassers zur Zubereitung der NaOH-Lösung für die Polycarbonat-Herstellung wiederverwendet werden.

Die erste Waschphase konnte zusätzlich mit dem Reaktionsabwasser vereinigt und nach Entfernung von Lösungsmittelresten und Katalysator der NaCl-Elektrolyse zugeführt werden.

## Patentansprüche

1. Verfahren zur Herstellung von Polycarbonat nach dem Phasengrenzflächenverfahren und Verarbeitung mindestens eines Teils der dabei anfallenden Alkalichlorid-haltigen Lösung in einer nachgeschalteten Alkalichlorid-Elektrolyse, umfassend die folgenden Schritte:
a) Herstellung von Phosgen durch Umsetzung von Chlor mit Kohlenmonoxid,
b) Umsetzung des gemäß Schritt a) gebildeten Phosgens mit wenigstens einem Bisphenol in Gegenwart wenigstens einer Base, gegebenenfalls wenigstens eines basischen Katalysator und gegebenenfalls wenigstens eines organischen Lösungsmittels zu einem Polycarbonat und einer Alkalichlorid-haltigen Lösung,
c) Abtrennung und Aufarbeitung des in Schritt b) gebildeten Polycarbonats,
d) Abtrennung der gemäß Schritt c) verbliebenen Alkalichlorid-haltigen Lösung von Lösungsmittelresten und gegebenenfalls Katalysatorresten, insbesondere durch Strippen der Lösung mit Wasserdampf, und Behandlung mit Adsorbentien, insbesondere mit Aktivkohle,
e) Elektrochemische Oxidation wenigstens eines Teils der Alkalichlorid-haltigen Lösung aus d) unter Bildung von Chlor, Alkalilauge und gegebenenfalls Wasserstoff,
**dadurch gekennzeichnet, dass** bei der Abtrennung d) der Lösung vor der Behandlung mit Adsorbentien die Lösung auf einen pH-Wert kleiner oder gleich 8 eingestellt wird und
f) wenigstens ein Teil des gemäß Schritt e) hergestellten Chlors in die Herstellung von Phosgen gemäß Schritt a) zurückgeführt wird und/oder
g) wenigstens ein Teil des gemäß Schritt e) hergestellten Alkalilauge in die Herstellung von Polycarbonat gemäß Schritt b) zurückgeführt wird.

2. Verfahren gemäß Anspruch 1, **dadurch gekennzeichnet, dass** die elektrochemische Oxidation wenigstens eines Teiles der Alkalichlorid-haltigen Lösung aus d) zu Chlor und Natronlauge unter Einsatz von Gasdiffusionselektroden als Kathode erfolgt.

3. Verfahren gemäß Anspruch 1, **dadurch gekennzeichnet, dass** wenigstens ein Teil der gereinigten Alkalichlorid-haltigen Lösung aus d) in den Solekreislauf einer Membranelektrolyse zur Herstellung von Chlor, Natronlauge und gegebenenfalls Wasserstoff gegeben wird.

4. Verfahren gemäß einem der Ansprüche 1 bis 3, **dadurch gekennzeichnet, dass** der Alkalichlorid-haltigen Lösung bei der Elektrolyse e) zusätzliches Alkalichlorid zur Erhöhung der Alkalichlorid-Konzentration zugegeben wird.

5. Verfahren gemäß einem der Ansprüche 1 bis 4, **dadurch gekennzeichnet, dass** die Alkalichlorid-haltige Lösung bei der Reinigung d) auf einen pH-Wert von kleiner als 7 eingestellt ist, insbesondere durch Einsatz von Salzsäure oder Chlorwasserstoff.

6. Verfahren gemäß einem der Ansprüche 1 bis 5, **dadurch gekennzeichnet, dass** die Alkalichlorid-Konzentration der in die Elektrolyse gelangenden Alkalichlorid-Lösung von 100 bis 280 g/l, bevorzugt 110 bis 220 g/l beträgt und/oder dass die Konzentration der Natronlauge, die aus der Elektrolyse erhalten wird, 13 bis 33 Gew.-%, bevorzugt 20 bis 32 Gew.-%, beträgt.

7. Verfahren gemäß einem der Ansprüche 1 bis 6, **dadurch gekennzeichnet, dass** Ionenaustauschermembranen bei der Elektrolyse e) eingesetzt werden, deren Wassertransport je mol Natrium größer ist als 4 mol H₂O/mol Natrium.

8. Verfahren gemäß Anspruch 7, **dadurch gekennzeichnet, dass** vorzugsweise Ionenaustauschermembranen bei der Elektrolyse e) eingesetzt werden, deren Wasser-transport je mol Natrium 5,5 bis 6,5 mol H₂O/mol Natrium beträgt.

9. Verfahren gemäß einem der Ansprüche 1 bis 8, **dadurch gekennzeichnet, dass** die Elektrolyse bei einer Stromdichte von 2 bis 6 kA/m² betrieben wird, wobei die zugrundegelegte Fläche zur Berechnung der Stromdichte die Membranfläche ist.

10. Verfahren gemäß einem der Ansprüche 1 bis 9, **dadurch gekennzeichnet, dass** die Elektrolyse e) bei einer Temperatur von 70 bis 100°C, vorzugsweise bei 80 bis 95°C betrieben wird.

11. Verfahren gemäß einem der Ansprüche 1 bis 10, **dadurch gekennzeichnet, dass** die Elektrolyse bei einem Absolutdruck von 1,0 bis 1,4 bar, bevorzugt 1,1 bis 1,3 bar betrieben wird.

12. Verfahren gemäß einem der Ansprüche 1 bis 11, **dadurch gekennzeichnet, dass** die Elektrolyse e) mit einem Differenzdruck zwischen Kathoden- und Anodenraum von 20 bis 150 mbar, vorzugsweise 30 bis 100 mbar betrieben wird.

13. Verfahren gemäß einem der Ansprüche 1 bis 12, **dadurch gekennzeichnet, dass** die Elektrolyse mit einer Anode betrieben wird, die als Beschichtung neben Rutheniumoxid auch weitere Edelmetallverbindungen der 7. und 8. Nebengruppe und/oder der 4. Hauptgruppe des Periodensystems der Elemente enthält.

14. Verfahren gemäß einem der Ansprüche 1 bis 13, **dadurch gekennzeichnet, dass** in der Elektrolyse e) in den Zellen Anoden mit größerer Oberfläche als die Oberfläche der Membranen eingesetzt werden.

15. Verfahren gemäß einem der Ansprüche 1 bis 14, **dadurch gekennzeichnet, dass** die Alkalichlorid-haltige Lösung aus d) vor der Elektrolyse e) mittels Membranverfahren aufkonzentriert wird.

16. Verfahren nach einem der Ansprüche 1 bis 15, **dadurch gekennzeichnet, dass** als Bisphenol(e) Dihydroxydiarylalkan(e) der allgemeinen Formel (I),
HO-Z-OH (I)
worin Z ein divalenter organischer Rest mit 6 bis 30 Kohlenstoffatomen ist, der eine oder mehrere aromatische Gruppen enthält, in der Reaktion von Schritt b) eingesetzt werden.

17. Verfahren gemäß einem der Ansprüche 1 bis 16, **dadurch gekennzeichnet, dass** als Bisphenol(e) in Schritt b) 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxy-phenyl)propan (Bisphenol A (BPA)), 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-di-methyl-4-hydroxyphenyl)-2-methylbutan, 1,3-Bis-[2-(3,5-dimethyl-4-hydroxyphenyl)-2-propyl]-benzol, 1,1-Bis-(4-hydroxyphenyl)-cyclohexan und/oder 1,1-Bis-(4-hydroxyphenyl)-3,3,5-trimethylcyclohexan (Bisphenol TMC) eingesetzt werden.

18. Verfahren nach einem der Ansprüche 1 bis 17, **dadurch gekennzeichnet, dass** die Alkalichlorid-haltige Lösung des Reaktionsabwassers aus b) oder wenigstens teilweise mit Waschwasser aus der Aufarbeitung c) des Polycarbonats vereinigt eingesetzt wird.

19. Verfahren nach einem der Ansprüche 1 bis 18, **dadurch gekennzeichnet, dass** Schritt c) wenigstens die folgenden Schritte umfasst:
aa) Trennung von Polycarbonat-enthaltender organischer Phase und wässriger Alkalichlorid-haltiger Reaktionsabwasserlösung
bb) wenigstens einmaliges Waschen der in Schritt aa) erhaltenen Polycarbonatenthaltenden organischen Phase,
wobei wenigstens eines Teils der Waschphase(n) aus c)bb) gegebenenfalls nach Trennung von Katalysatorresten und gegebenenfalls organischen Lösungsmittelresten als Teilersatz des Wassers zur Herstellung der Natronlauge für Schritt b) verwendet wird.

## Claims

1. Process for the preparation of polycarbonate by the phase boundary process and processing at least a part of the resulting alkali metal chloride-containing solution in a downstream alkali metal chloride electrolysis, comprising the following steps:
a) preparation of phosgene by reaction of chlorine with carbon monoxide,
b) reaction of the phosgene formed according to step a) with at least one bisphenol in the presence of at least one base, optionally at least one basic catalyst and optionally at least one organic solvent to give a polycarbonate and an alkali metal chloride-containing solution,
c) isolation and working-up of the polycarbonate formed in step b),
d) separation of the alkali metal chloride-containing solution remaining according to step c) from solvent residues and optionally catalyst residues, in particular by stripping off the solution with steam and treatment with adsorbents, in particular with active carbon,
e) electrochemical oxidation of at least a part of the alkali metal chloride-containing solution from d) with the formation of chlorine, alkali metal hydroxide solution and optionally hydrogen,
**characterized in that**, in the separation d) of the solution prior to treatment with adsorbents, the solution is adjusted to a pH of less than or equal to 8 and
f) at least a part of the chlorine prepared according to step e) is recycled to the preparation of phosgene according to step a) and/or
g) at least a part of the alkali metal hydroxide solution prepared according to step e) is recycled to the preparation of polycarbonate according to step b).

2. Process according to Claim 1, **characterized in that** the electrochemical oxidation of at least a part of the alkali metal chloride-containing solution from d) to chlorine and sodium hydroxide solution is effected with the use of gas diffusion electrodes as the cathode.

3. Process according to Claim 1, **characterized in that** at least a part of the purified alkali metal chloride-containing solution from d) is added to the brine circulation of a membrane electrolysis for the preparation of chlorine, sodium hydroxide solution and optionally hydrogen.

4. Process according to any of Claims 1 to 3, **characterized in that** additional alkali metal chloride is added to the alkali metal chloride-containing solution in the electrolysis e) for increasing the alkali metal chloride concentration.

5. Process according to any of Claims 1 to 4, **characterized in that** the alkali metal chloride-containing solution in the purification d) is adjusted to a pH of less than 7, in particular by use of hydrochloric acid or hydrogen chloride.

6. Process according to any of Claims 1 to 5, **characterized in that** the alkali metal chloride concentration of the alkali metal chloride solution entering the electrolysis is from 100 to 280 g/l, preferably 110 to 220 g/l, and/or **in that** the concentration of the sodium hydroxide solution which is obtained from the electrolysis is 13 to 33% by weight preferably 20 to 32% by weight.

7. Process according to any of Claims 1 to 6, **characterized in that** ion exchanger membranes whose water transport per mole of sodium is greater than 4 mol of H₂O/mol of sodium are used in the electrolysis e).

8. Process according to Claim 7, **characterized in that** preferably ion exchanger membranes whose water transport per mole of sodium is 5.5 to 6.5 mol of H₂O/mol of sodium are used in the electrolysis e).

9. Process according to any of Claims 1 to 8, **characterized in that** the electrolysis is operated at a current density of 2 to 6 kA/m², the area taken as a basis for calculating the current density being the membrane area.

10. Process according to any of Claims 1 to 9, **characterized in that** the electrolysis e) is operated at a temperature of 70 to 100°C, preferably at 80 to 95°C.

11. Process according to any of Claims 1 to 10, **characterized in that** the electrolysis is operated at an absolute pressure of 1.0 to 1.4 bar, preferably 1.1 to 1.3 bar.

12. Process according to any of Claims 1 to 11, **characterized in that** the electrolysis e) is operated with a pressure difference between cathode space and anode space of 20 to 150 mbar, preferably 30 to 100 mbar.

13. Process according to any of Claims 1 to 12, **characterized in that** the electrolysis is operated with an anode which contains, as a coating, also further noble metal compounds of the 7th and 8th subgroups and/or of the 4th main group of the Periodic Table of the Elements in addition to ruthenium oxide.

14. Process according to any of Claims 1 to 13, **characterized in that** anodes having a larger surface area than the surface area of the membranes are used in the cells in the electrolysis e).

15. Process according to any of Claims 1 to 14, **characterized in that** the alkali metal chloride-containing solution from d) is concentrated before the electrolysis e) by means of a membrane process.

16. Process according to any of Claims 1 to 15, **characterized in that** the dihydroxydiarylalkane(s) of the general formula (I)
HO-Z-OH (I)
in which Z is a divalent organic radical having 6 to 30 carbon atoms, which contains one or more aromatic groups, are used as bisphenol(s) in the reaction of step b).

17. Process according to any of Claims 1 to 16, **characterized in that** 4,4'-dihydroxybiphenyl, 2,2-bis(4-hydroxyphenyl)-1-phenylpropane, 1,1-bis(4-hydroxyphenyl)phenylethane, 2,2-bis(4-hydroxyphenyl)propane (bisphenol A (BPA)), 2,4-bis(4-hydroxyphenyl)-2-methylbutane, 1,3-bis[2-(4-hydroxyphenyl)-2-propyl]benzene (bisphenol M), 2,2-bis(3-methyl-4-hydroxyphenyl)propane, bis(3,5-dimethyl-4-hydroxyphenyl)methane, 2,2-bis(3,5-dimethyl-4-hydroxyphenyl)propane, bis(3,5-dimethyl-4-hydroxyphenyl) sulphone, 2,4-bis(3,5-dimethyl-4-hydroxyphenyl)-2-methylbutane, 1,3-bis[2-(3,5-dimethyl-4-hydroxyphenyl)-2-propyl]benzene, 1,1-bis(4-hydroxyphenyl)cyclohexane and/or 1,1-bis(4-hydroxyphenyl)-3,3,5-trimethylcyclohexane (bisphenol TMC) are used as bisphenol (s) in step b).

18. Process according to any of Claims 1 to 17, **characterized in that** the alkali metal chloride-containing solution of the reaction wastewater from b), or at least partly combined with wash water from the working-up c) of the polycarbonate, is used.

19. Process according to any of Claims 1 to 18, **characterized in that** step c) comprises at least the following steps:
aa) separation of polycarbonate-containing organic phase and aqueous alkali metal chloride-containing reaction wastewater solution,
bb) washing of the polycarbonate-containing organic phase obtained in step aa) at least once,
at least a part of the wash phase(s) from bb), after separation of catalyst residues and optionally organic solvent residues, optionally being used as a partial replacement of the water for the preparation of the sodium hydroxide solution for step b).

## Revendications

1. Procédé pour la production de polycarbonate selon la procédé en interface de phases et traitement d'au moins une partie de la solution contenant un chlorure de métal alcalin, ainsi produite, dans une électrolyse de chlorure de métal alcalin raccordée en aval, comprenant les étapes suivantes :
a) production de phosgène par mise en réaction de chlore avec du monoxyde de carbone,
b) mise en réaction du phosgène formé dans l'étape a) avec au moins un bisphénol en présence d'au moins une base, éventuellement d'au moins un catalyseur basique et éventuellement d'au moins un solvant organique, pour l'obtention d'un polycarbonate et d'une solution contenant un chlorure de métal alcalin,
c) séparation et traitement final du polycarbonate formé dans l'étape b),
d) séparation de la solution contenant un chlorure de métal alcalin, restant selon l'étape c), d'avec des restes de solvant et éventuellement des restes de catalyseur, en particulier par entraînement de la solution par la vapeur d'eau, et traitement par des adsorbants, en particulier par du charbon actif,
e) oxydation électrochimique d'au moins une partie de la solution contenant un chlorure de métal alcalin, provenant de d), avec formation de chlore, d'une solution d'hydroxyde de métal alcalin et éventuellement d'hydrogène,
**caractérisé en ce que** lors de la séparation d) de la solution avant le traitement par des adsorbants on ajuste la solution à un pH inférieur ou égal à 8 et
f) on recycle au moins une partie du chlore produit selon l'étape e) dans la production de phosgène selon l'étape a) et/ou
g) on recycle au moins une partie de la solution d'hydroxyde de métal alcalin produite selon l'étape e) dans la production de polycarbonate selon l'étape b).

2. Procédé selon la revendication 1, **caractérisé en ce que** l'oxydation électrochimique d'au moins une partie de la solution contenant un chlorure de métal alcalin, provenant de d), en chlore et solution d'hydroxyde de sodium s'effectue avec utilisation d'électrodes à diffusion gazeuse en tant que cathode.

3. Procédé selon la revendication 1, **caractérisé en ce qu'**au moins une partie de la solution purifiée contenant un chlorure de métal alcalin, provenant de d), est introduite dans le circuit d'eau salée d'une électrolyse sur membrane pour la production de chlore, solution d'hydroxyde de sodium et éventuellement hydrogène.

4. Procédé selon l'une quelconque des revendications 1 à 3, **caractérisé en ce que** lors de l'électrolyse e) on ajoute à la solution contenant un chlorure de métal alcalin du chlorure de métal alcalin supplémentaire pour augmenter la concentration du chlorure de métal alcalin.

5. Procédé selon l'une quelconque des revendications 1 à 4, **caractérisé en ce que** lors de la purification d) on ajuste à un pH inférieur à 7 la solution contenant un chlorure de métal alcalin, en particulier à l'aide d'acide chlorhydrique ou chlorure d'hydrogène.

6. Procédé selon l'une quelconque des revendications 1 à 5, **caractérisé en ce que** la concentration de chlorure de métal alcalin de la solution de chlorure de métal alcalin arrivant dans l'électrolyse vaut de 100 à 280 g/l, de préférence de 110 à 220 g/l et/ou **en ce que** la concentration de la solution d'hydroxyde de sodium, qui est obtenue à partir de l'électrolyse, vaut de 13 à 33 % en poids, de préférence de 20 à 32 % en poids.

7. Procédé selon l'une quelconque des revendications 1 à 6, **caractérisé en ce que** dans l'électrolyse e) on utilise des membranes échangeuses d'ions, dont le transport d'eau par mole de sodium est supérieur à 4 moles de H₂O/mole de sodium.

8. Procédé selon la revendication 7, **caractérisé en ce que** dans l'électrolyse e) on utilise de préférence des membranes échangeuses d'ions, dont le transport d'eau par mole de sodium vaut de 5,5 à 6,5 moles de H₂O/mole de sodium.

9. Procédé selon l'une quelconque des revendications 1 à 8, **caractérisé en ce qu'**on faut fonctionner l'électrolyse à une densité de courant de 2 à 6 kA/m², la surface de base pour le calcul de la densité de courant étant la surface de la membrane.

10. Procédé selon l'une quelconque des revendications 1 à 9, **caractérisé en ce qu'**on fait fonctionner l'électrolyse e) à une température de 70 à 100 °C, de préférence de 80 à 95 °C.

11. Procédé selon l'une quelconque des revendications 1 à 10, **caractérisé en ce qu'**on fait fonctionner l'électrolyse sous une pression absolue de 1,0 à 1,4 bar, de préférence de 1,1 à 1,3 bar.

12. Procédé selon l'une quelconque des revendications 1 à 11, **caractérisé en ce qu'**on fait fonctionner l'électrolyse e) à une différence de pression entre le compartiment cathodique et le compartiment anodique de 20 à 150 mbars, de préférence de 30 à 100 mbars.

13. Procédé selon l'une quelconque des revendications 1 à 12, **caractérisé en ce qu'**on fait fonctionner l'électrolyse avec une anode qui comporte comme revêtement outre de l'oxyde de ruthénium également d'autres composés de métaux nobles du groupe 7B et du groupe 8B et/ou du groupe 4A du système périodique des éléments.

14. Procédé selon l'une quelconque des revendications 1 à 13, **caractérisé en ce que** dans l'électrolyse e) on utilise dans les cellules des anodes à surface plus grande que la surface des membranes.

15. Procédé selon l'une quelconque des revendications 1 à 14, **caractérisé en ce qu'**avant l'électrolyse e) on concentre par des procédés sur membrane la solution contenant un chlorure de métal alcalin, provenant de d).

16. Procédé selon l'une quelconque des revendications 1 à 15, **caractérisé en ce que** dans la réaction de l'étape b) on utilise en tant que bisphénol(s) des dihydroxydiarylalcane(s) de formule générale (I)
HO-Z-OH (I)
dans laquelle Z est un radical organique divalent ayant de 6 à 30 atomes de carbone, qui contient un ou plusieurs groupes aromatiques.

17. Procédé selon l'une quelconque des revendications 1 à 16, **caractérisé en ce que** dans l'étape b) on utilise en tant que bisphénol(s) le 4,4'-dihydroxydiphényle, le 2,2-bis-(4-hydroxyphényl)-1-phényl-propane, le 1,1-bis-(4-hydroxyphényl)-phényl-éthane, le 2,2-bis-(4-hydroxyphényl)propane (bisphénol A (BPA)), le 2,4-bis-(4-hydroxyphényl)-2-méthylbutane, le 1,3-bis-[2-(4-hydroxyphényl)-2-propyl]benzène (bisphénol M), le 2,2-bis-(3-méthyl-4-hydroxyphényl)-propane, le bis-(3,5-diméthyl-4-hydroxyphényl)-méthane, le 2,2-bis-(3,5-diméthyl-4-hydroxyphényl)-propane, la bis-(3,5-diméthyl-4-hydroxyphényl)-sulfone, le 2,4-bis-(3,5-diméthyl-4-hydroxyphényl)-2-méthylbutane, le 1,3-bis-[2-(3,5-diméthyl-4-hydroxyphényl)-2-propyl]-benzène, le 1,1-bis-(4-hydroxyphényl)-cyclohexane et/ou le 1,1-bis-(4-hydroxyphényl)-3,3,5-triméthylcyclohexane (bisphénol TMC).

18. Procédé selon l'une quelconque des revendications 1 à 17, **caractérisé en ce qu'**on utilise la solution contenant un chlorure de métal alcalin de l'eau résiduaire de la réaction provenant de b) ou réunie au moins en partie avec l'eau de lavage provenant du traitement final c) du polycarbonate.

19. Procédé selon l'une quelconque des revendications 1 à 18, **caractérisé en ce que** l'étape c) comprend au moins les étapes suivantes :
aa) séparation de la phase organique contenant du polycarbonate et de la solution aqueuse d'eau résiduaire de la réaction, contenant un chlorure de métal alcalin
bb) au moins un lavage de la phase organique contenant du polycarbonate, obtenue dans l'étape aa),
au moins une partie de la/des phase(s) de lavage provenant de bb) étant éventuellement utilisée comme substitut partiel de l'eau dans la préparation de la solution d'hydroxyde de sodium pour l'étape b), éventuellement après séparation des restes de catalyseur et éventuellement de restes de solvants organiques.
